# EUROPÄISCHE PATENTSCHRIFT

(11) **EP 1 622 842 B1**
(45) Veröffentlichungstag und Bekanntmachung des Hinweises auf die Patenterteilung: **16.06.2010**
(21) Anmeldenummer: 04730521.4
(22) Anmeldetag: 30.04.2004
(51) Int. Cl.: C03C 21/00, C03C 23/00

(54) **ALKALIHALTIGE GLÄSER MIT MODIFIZIERTEN GLASOBERFLÄCHEN UND VERFAHREN ZU IHRER HERSTELLUNG**
ALKALINE GLASSES WITH MODIFIED SURFACES AND METHOD FOR PRODUCING SAME
VERRES ALCALINS AUX SURFACES MODIFIEES ET LEUR PROCEDE DE PRODUCTION

(30) Priorität: 02.05.2003 DE 10319708
(43) Veröffentlichungstag der Anmeldung: 08.02.2006
(73) Patentinhaber: Hessenkemper, Heiko, Prof. Dr., 09603 Grossschirma (DE); Landfermann-Hessenkemper, Heide, 09603 Grossschirma (DE)
(72) Erfinder: Hessenkemper, Heiko, Prof. Dr., 09603 Grossschirma (DE); Landfermann-Hessenkemper, Heide, 09603 Grossschirma (DE)
(74) Vertreter: Eisenführ, Speiser & Partner
(86) Internationale Anmeldenummer: PCT/EP2004/004642
(87) Internationale Veröffentlichungsnummer: WO 2004/096724

(56) Entgegenhaltungen:
- US-A- 5 510 144
- PATENT ABSTRACTS OF JAPAN Bd. 0100, Nr. 23 (C-325), 29. Januar 1986 (1986-01-29) & JP 60 176952 A (ASAHI GLASS KK), 11. September 1985 (1985-09-11)

## Beschreibung

Innerhalb der Anwendung von Gläsern spielen die Oberflächeneigenschaften im Hinblick auf die Wechselwirkung mit der Umgebung eine wesentliche Rolle, wobei hier insbesondere chemische und mechanische Eigenschaften zu nennen sind. Aus unterschiedlichen Gründen, die u. a. in der Schmelzbarkeit und Schmelztechnologie liegen, sind häufig relativ hohe Alkaligehalte gewünscht, die auf der anderen Seite aber zu einer Verminderung der hydrolytischen Beständigkeit und der mechanischen Eigenschaften führen. Eine bisher übliche Lösung aus diesem Dilemma ist eine Oberflächenbehandlung, die im Allgemeinen durch Entalkalisierungsprozesse beschrieben werden, wie sie zusammengefasst in [1: Glastechnische Fabrikationsfehler, H. J. Jebsen-Marwedel, R. Brückner: Springer-Verlag 1980, Seite 507-508] und in [2: Patentanmeldung Deutsches Patent- und Markenamt. Verfahren zur Herstellung von Emails, Aktenzeichen 102 46 928.8] dargestellt sind. Bei dieser Problematik der Entalkalisierung, z. B. durch Schwefelwasserdampfeinfluss etc. taucht ein grundsätzliches Problem auf, das darin begründet ist, dass für eine hohe Reaktivität im Allgemeinen hohe Reaktionstemperaturen notwendig sind, die allerdings wieder zu einer Natriumrückdiffusion aus dem Volumen an die Oberfläche führen können. Insbesondere bei späteren Behandlungsprozessen wie eine Nachbearbeitung unter der Flamme, die mit hohen Temperaturen verbunden ist, kann die thermisch angeregte Natriumrückdiffusion aus dem Volumen zu einer signifikanten Verschlechterung der ursprünglich erreichten Eigenschaften führen.

US5510144 beschreibt eine Methode zur Verhinderung der Rückdiffusion von Blei-Ionen zur Glasoberfläche durch Behandlung mit Aluminium- und Eisensulphatdämpfen. JP60176952 lehrt eine Oberflächenbehandlung von Glas zur Verhinderung atmosphärischer Korrosion mit sauren Lösungen von Aluminiumsulphat bei 20-90°C, welche optional auch Aluminiumchlorid enthalten können.

Technische Aufgabe der Erfindung ist es, die modifizierte Glasoberfläche so zu stabilisieren, dass im Gegensatz zum Stand der Technik eine Natriumrückdiffusion aus dem Volumen auch bei höheren Temperaturen und insbesondere bei Nachbearbeitungen mit der Flamme weitgehend vermieden werden.

Überraschend wurde gefunden, dass eine modifizierte Glasoberfläche eines alkalihaltigen Glases gegen eine Natriumrückdiffusion aus dem Volumen bei höheren Temperaturen weitgehend resistent ist, wenn der Chemismus innerhalb der Oberfläche eine gegenüber dem Volumen deutlich erhöhte Aluminiumkonzentration aufweist. Die Ursache kann in der sehr hohen negativen Bildungsenthalpie von Albitphasen liegen. Das erfindungsgemäße Verfahren ist **dadurch gekennzeichnet, dass** die Oberfläche dieser Gläser in Kontakt mit Aluminiumchloridverbindungen aus der Dampfphase gebracht wird.

Optische Beeinträchtigungen können vermieden werden, wenn bei hohen Temperaturen das aluminiumhaltige Material sich aus der Gasphase an der Glasoberfläche niederschlägt und dabei gleichzeitig die notwendigen Verbindungen eingeht. Das Aluminiumchlorid wird dabei mindestens in einer Menge von 0,1 g/m³ kontaktierenden Volumens eingesetzt, vorzugsweise in einer Menge von 1 bis 10 g/m³. Die Obergrenze wird durch den Sättigungsdampfdruck bestimmt. Die Temperatur der Aluminiumchloridverbindungen liegt zwischen der Sublimationstemperatur von 170 °C und bis zu 600 K oberhalb der Transformationstemperatur des Glases. Die Dauer der Kontaktierung der Gläser mit Aluminiumchloridverbindungen aus der Gasphase beträgt mindestens 0,1 Sekunden bei hohen Temperaturen und bis zu einer Stunde bei niedrigen Temperaturen. Die Probentemperatur der Glasoberfläche wird nach unten durch die

Temperaturwechselbeständigkeit des Glases begrenzt. Die obere Grenze kann bis 600 K oberhalb der Transformationstemperatur des Glases liegen. Beim Arbeiten mit Aluminiumchloriden in der Gasphase sind mögliche schwache Rückstände einfach auszuwaschen. Beim Einsatz von Aluminiumchlorid ist zwischen dem Einsatz mit Kristallwasser und ohne Kristallwasser zu differenzieren. Mit Kristallwasser ist eine stärkere Oberflächenmodifizierung und Steigerung der hydrolytischen Beständigkeit und der Mikrohärte der Gläser festzustellen, ohne optische Beeinträchtigung. Beim Einsatz von wasserfreiem Aluminiumchlorid sind eher erkennbare optische Beeinträchtigungen zu beobachten.

Das erfindungsgemäße Verfahren kann auch vorteilhaft bei der Röhrenglasherstellung Anwendung finden. Bei der Röhrenglasherstellung wird als Ausblasmedium mit Überdruck beim Vello- oder Dannerverfahren Luft an die Innenoberflächen der Glasröhren gebracht. Es bietet sich an, erwärmte Luft mit über 170°C zu verwenden, in der sich verdampftes AlCl₃ befindet. Damit wird zunächst eine Kondensation vermieden. Dieses Gas kommt dann nach der Ziehzwiebel in den Kontakt mit der heißen Innenoberfläche des Glases, wobei dann die Modifikation der Glasoberfläche stattfinden kann. Das Gas strömt dann am kalten Ende des Rohrstranges aus der

Rohröffnung heraus und hat damit über einen Zeitraum von bis zu mehreren Minuten und von hohen Temperaturen (bis zu 600 K oberhalb Tg) bis hin zum Schneiden des Glases Zeit, mit der Glasoberfläche zu reagieren. Hierbei kann es zur Vermeidung von Kondensationen notwendig sein, die Schneidetemperatur des Rohres oberhalb von 170°C zu halten.

### Beispiel 1

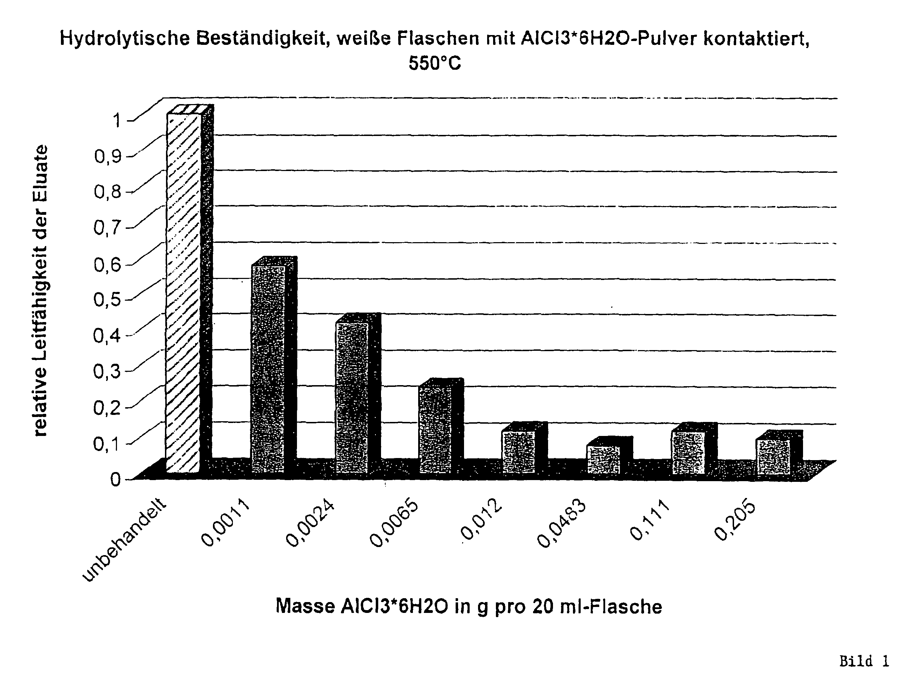

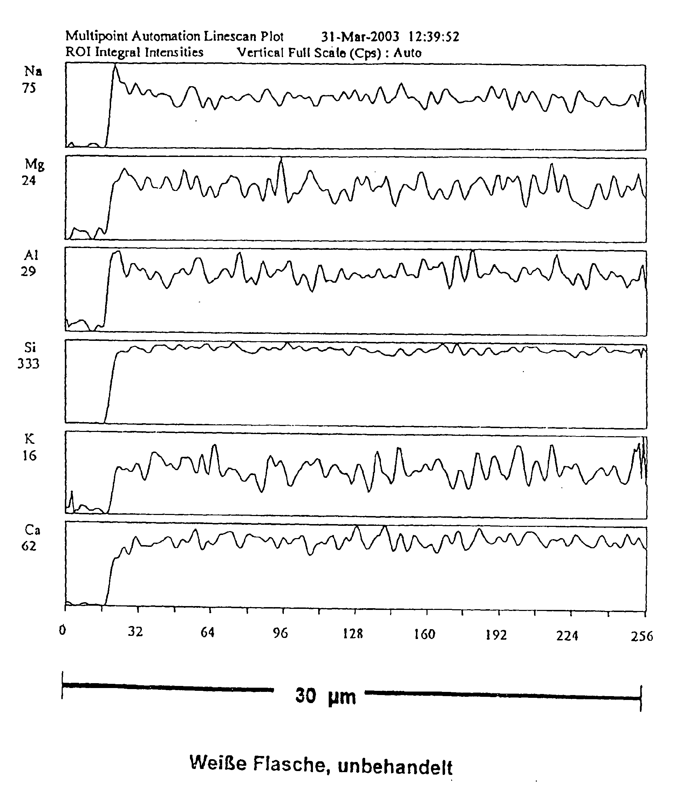

Als typische Ergebnisse sind im Bild 1 die hydrolytische Beständigkeit weißer Flaschen aus Kalknatronsilikatglas mit der Zusammensetzung: 71,0% SiO₂, 1,7% Al₂O₃, 0,02% Fe₂O₃, 1,3% K₂O, 15,5% Na₂O, 9,4% CaO, 2,7% MgO und 0,25 SO₃ dargestellt, wobei die Proben mit verschiedenen Mengen AlCl₃ * 6 H₂O in einem Ofen auf Temperaturen von 550°C gebracht wurden und dann dort abkühlten. Die in den Behälter eingebrachten Aluminiumchloridmengen bezogen sich auf eine angebotene Glasoberfläche von 3814 mm² und ein Volumen von 20 ml, wobei wasserfreies Aluminiumchlorid bei 180°C in die Dampf-phase übergehen sollte, bzw. nach eigenen DTA-Messungen sich das Material mit Kristallwasser erst bei Temperaturen von 203°C zersetzt. Die Behälter wurden über das Probenmaterial übergestülpt und nach 15 Minuten Behandlungszeit im Muffelofen mit abgekühlt. In der Tabelle 1 sind ver-schiedene Behandlungsschritte in ihrer Wirkung auf die hydrolytische Beständigkeit dargestellt.

**Tabelle 1:**

| **Probenbezeichnung** | **Leitfähigkeit µS** | | **Behandlung** |
|---|---|---|---|
| | Messung 1 | Messung 2 | |
| I | 6,5 | 5,9 | 0,01 g AlCl₃ * 6 H₂O+4,49 µl H₂O |
| II | 12,0 | 6,7 | 0,01 g AlCl₃ * 6 H₂O |
| III | 4,1 | 4,2 | 0,0055 g AlCl₃ + 4,49⁻µl H ₂O |
| IV | 4,2 | 5,2 | 0,0055 g AlCl₃ + 13,3⁻µl⁻H₂O |
| V | 27,6 | 29,8 | 10,37 µl HCl |
| VI | 19,0 | 18,0 | 31 µl HCl |
| VII | 63,9 | 61,9 | 4,49 µl H₂O |
| VIII | 65,1 | 61,4 | 13,5µl H₂O |
| IX | 67,1 | 56,4 | 40 µl H₂O |
| WF20 | 61,2 | 60,4 | unbehandelt |

| |
|---|
| T = 550°C, 10 Minuten Behandlungszeit |
| Gemessene Leitfähigkeit: |
| 48 h bei 90 °C im destillierten Wasser 20 ml |
| Innenvolumen mit Al-Folie abgedeckt. |

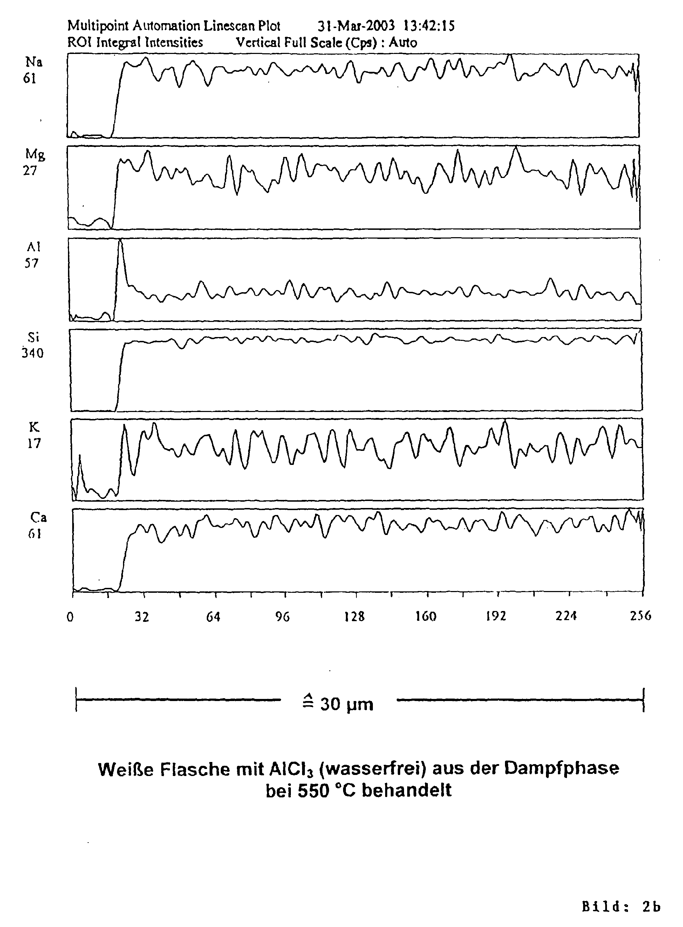

Die Bilder 2a (unbehandeltes Glas) und 2b (erfindungsgemäß behandeltes Glas) zeigten den mit einer Mikrosonde aufgenommenen Line scan über eine Länge von 30 µm mit den elementspezifischen Signalintensitäten dieses untersuchten Weißglases. Deutlich wird die Aluminiumanreicherung an der Oberfläche in einem Bereich kleiner 1 µm nach dem erfindungsgemäßen Verfahren.

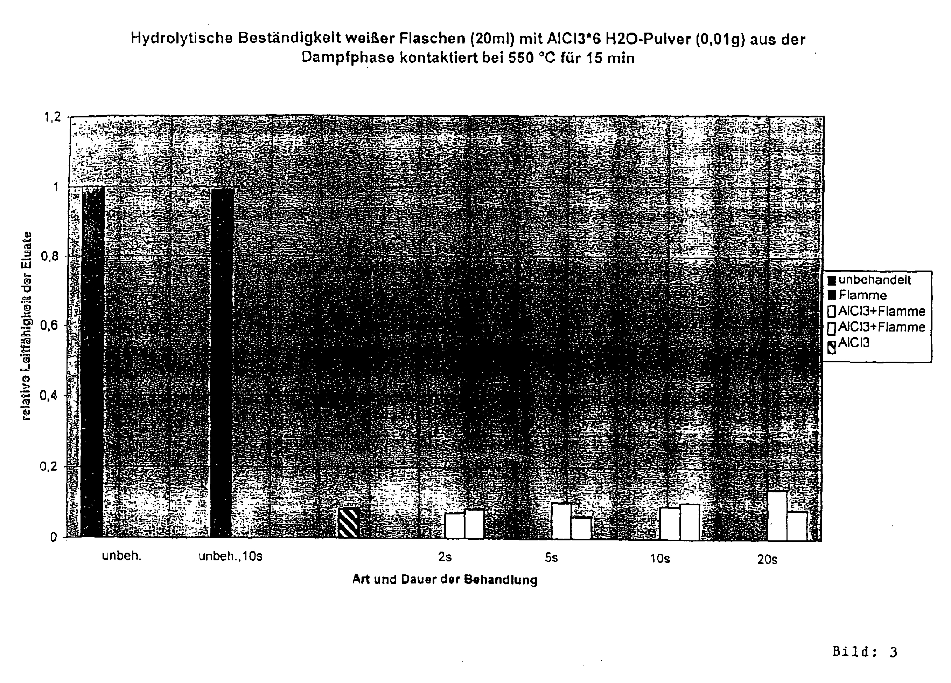

Die thermische Stabilität der Schichten wird im Bild 3 verdeutlicht, aus dem auch die Behandlungsschritte hervorgehen. Nach Abschluss der Behandlung wurden die Gläser im kalten Zustand einer Flammenbehandlung unterzogen. Es zeigte sich, dass die deutlich verbesserten hydrolytischen Beständigkeiten reproduzierbar erhalten bleiben.

### Beispiel 2

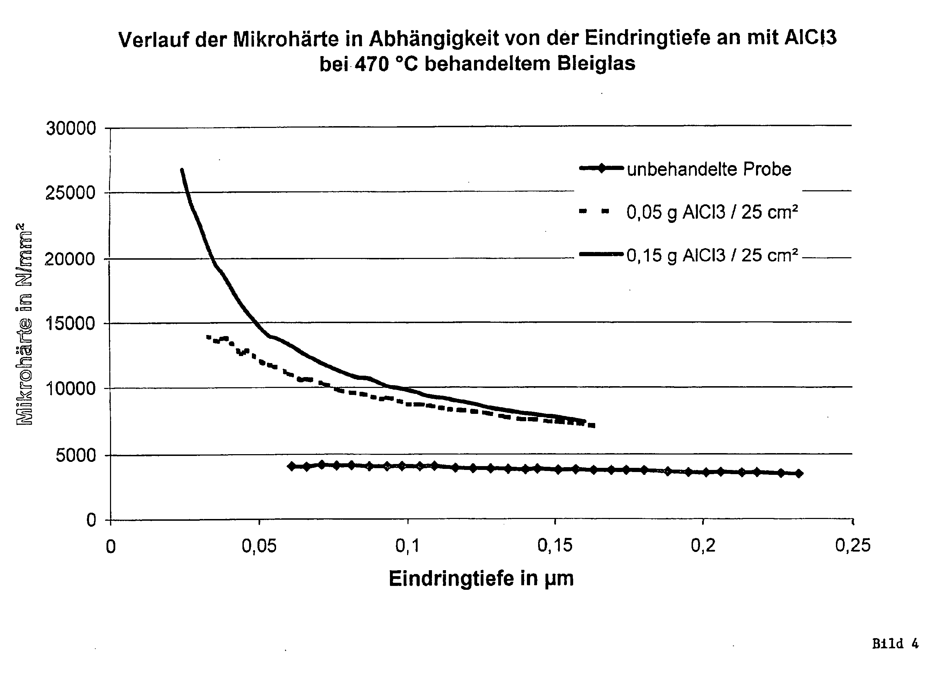

Bei einem Bleikristallglas wurde in einem Muffelofen eine definierte Menge (0,05g und 0,15g) AlCl₃ zusammen mit einer Glasprobe von 25 cm² in einen Korundtiegel gegeben, der mit Aluminiumfolie abgedeckt wurde. Nach einer Erhitzung auf 470°C und einer Haltezeit von 15 min bei abschließendem Ausschalten des Muffelofens und Abkühlen der Proben in dem Tiegel wurden die Gläser bezüglich der Mikrohärte analysiert. Die Ergebnisse sind im Bild 4 dargestellt und zeigen eine um gut 100% erhöhte Mikrohärte nach 150 nm Eindringtiefe, die bei noch geringeren Eindringtiefen sogar weit höhere Werte annehmen kann.

## Patentansprüche

1. Verfahren zur Herstellung alkalihaltiger Gläser mit modifizierter Glasoberfläche, **gekennzeichnet dadurch, dass** die Oberfläche dieser Gläser in Kontakt mit Aluminiumchloridverbindungen aus der Dampfphase gebracht wird.

2. Verfahren nach Anspruch 1, **gekennzeichnet dadurch, dass** die Oberfläche dieser Gläser mit Aluminiumchloridverbindungen aus der Dampfphase 0,1 Sekunden bis zu einer Stunde lang in Kontakt gebracht wird.

3. Verfahren nach Anspruch 1 oder 2, **gekennzeichnet dadurch, dass** die eingesetzten Aluminiumchloridverbindungen einer Menge von mindestens 0,1 g/m³ kontaktierenden Volumens entsprechen und die untere Probetemperatur der Glasoberfläche durch die Temperaturwechselbeständigkeit des Glases begrenzt wird und die obere Probetemperatur der Glasoberfläche bis 600 K oberhalb der Transformationstemperatur des Glases liegt.

4. Verfahren nach Anspruch 1 oder 2, **gekennzeichnet dadurch, dass** die Temperatur der Aluminiumchloridverbindungen zwischen der Sublimationstemperatur von 170°C und bis zu 600 K oberhalb der Transformationstemperatur des Glases liegt.

5. Verfahren nach Anspruch 1 oder 2, **gekennzeichnet dadurch, dass** bei der Röhrenglasproduktion der innere Ausblasdruck mittels einer gasförmigen Phase inklusive der Aluminiumchloridverbindungen realisiert wird und diese gasförmige Phase durch das Rohr gedrückt wird analog der Luft beim Vello- oder Dannerverfahren.

## Claims

1. Process for the production of alkali-containing glass having a modified glass surface, **characterised in that** the surface of said glass is brought into contact with aluminium chloride compounds from the vapour phase.

2. Process according to claim 1, **characterised in that** the surface of this glass is brought into contact with aluminium chloride compounds from the vapour phase for between 0.1 seconds and an hour.

3. Process according to either claim 1 or claim 2, **characterised in that** the aluminium chloride compounds used correspond to an amount of at least 0.1 g/m³ of contacting volume and the lower sample temperature of the glass surface is limited by the resistance of the glass to temperature change and the upper sample temperature of the glass surface is up to 600 K above the transformation temperature of the glass.

4. Process according to either claim 1 or claim 2, **characterised in that** the temperature of the aluminium chloride compounds is between the sublimation temperature of 170 °C and up to 600 K above the transformation temperature of the glass.

5. Process according to either claim 1 or claim 2, **characterised in that**, in the production of glass tubing, the internal blow pressure is produced by a gaseous phase containing the aluminium chloride compounds and this gaseous phase is forced through the tube in a manner similar to the air in the Vello or Danner processes.

## Revendications

1. Un procédé de production de verres alcalins avec une surface modifiée, **caractérisé en ce que** la surface supérieure de ce verre est amenée en contact avec des composés de chlorure d'aluminium en phase vapeur.

2. Le procédé selon la revendication 1, **caractérisé en ce que** la surface supérieure de ce verre est amenée en contact avec des composés de chlorure d'aluminium en phase vapeur de 0,1 seconde à une heure.

3. Le procédé selon l'une des revendications 1 ou 2, **caractérisé en ce que** les composés de chlorure d'aluminium utilisés correspondent à un volume de contact d'au moins 0,1 g/m³ et que la température inférieure de l'échantillon de la surface supérieure du verre est limitée par la résistance aux écarts de température du verre et la température supérieure de l'échantillon de la surface du verre s'étend jusqu'à 600° K au-dessus de la température de transformation du verre.

4. Le procédé selon l'une des revendications 1 ou 2, **caractérisé en ce que** la température des composés de chlorure d'aluminium s'étend entre la température de sublimation de 170°C et jusqu'à 600° K au-dessus de la température de transformation du verre.

5. Le procédé selon l'une des revendications 1 ou 2, **caractérisé en ce que**, dans la production de verre en forme de tube, la pression de soufflage interne est réalisée au moyen d'une phase gazeuse comprenant des composés de chlorure d'aluminium et que cette phase gazeuse est poussée le long du tube comme l'air dans un procédé Vello ou Danner.
